# EUROPEAN PATENT APPLICATION

(11) **EP 4 769 320 A1**
(43) Date of publication of application: **01.07.2026**
(21) Application number: 24879001.6
(22) Date of filing: 15.10.2024
(51) Int. Cl.: G06T 17/00

(54) **METHOD AND APPARATUS FOR GENERATING BOARD-LIKE THREE-DIMENSIONAL MODEL, AND STORAGE MEDIUM**

(30) Priority: 16.10.2023 CN 202311338101
(71) Applicant: Shenzhen Tuozhu Technology Co., Ltd., Shenzhen, Guangdong 518000 (CN)
(72) Inventor: LIU, Xinwen, Shenzhen, Guangdong 518000 (CN); LU, Xietong, Shenzhen, Guangdong 518000 (CN); LIAO, Ran, Shenzhen, Guangdong 518000 (CN)
(74) Representative: Grünecker Patent- und Rechtsanwälte PartG mbB
(86) International application number: PCT/CN2024/124991
(87) International publication number: WO 2025/082358

(57) **Abstract**

The present disclosure provides a method and apparatus for generating a plate-like three-dimensional model, and a storage medium. The method comprises: displaying a base plate image and an element bar, the base plate image being a two-dimensional image, and the element bar comprising a thickness icon and at least one content icon; when one or more content icons in the element bar are selected, acquiring content images corresponding to the selected content icons, and adding the content images corresponding to the selected content icons to the area of the base plate image, so as to obtain a board surface image; and when the thickness icon in the element bar is selected, acquiring the thickness corresponding to the board surface image, and generating a plate-like three-dimensional model on the basis of the thickness corresponding to the board surface image and the board surface image.

## Description

The present disclosure claims priority to the Chinese Patent Application Administration on October 16, 2023, with application number 2023113381015 and titled "METHOD AND APPARATUS FOR GENERATING PLATE-LIKE THREE-DIMENSIONAL MODEL, AND STORAGE MEDIUM", the entire contents of which are incorporated herein by reference.

### TECHNICAL FIELD

The present disclosure relates to the field of three-dimensional modeling, and in particular to a method and apparatus for generating a plate-like three-dimensional model, and a storage medium.

### BACKGROUND

A 3D printer, also known as a three-dimensional printer or an additive manufacturing device, is a process equipment for rapid prototyping. The 3D printing technology that can be currently adopted by a 3D printer is fused deposition modeling (FDM). FDM is a technology based on digital models for constructing three-dimensional objects using materials like plastic through layer-by-layer printing. 3D printing can be used to print some personalized models that are not suitable for mass production. However, users often need to build such personalized models themselves, which is relatively complex and has a certain entry barrier for users.

### SUMMARY

Embodiments of the present disclosure provide a method and apparatus for generating a plate-like three-dimensional model, and an electronic device. Embodiments of the present disclosure provide a method and apparatus for generating a plate-like three-dimensional model, an electronic device, a readable storage medium, and a computer program product. The generation of a custom plate-like 3D model is realized via interaction on a two-dimensional interface, which simplifies the operation and lowers the barrier to entry for users.

In a first aspect, the embodiments of the present disclosure provide a method for generating a plate-like three-dimensional model. The method includes:
displaying a base plate image and an element bar, where the base plate image is a two-dimensional image, and the element bar includes a thickness icon and at least one content icon;
acquiring, in the case that one or more content icons in the element bar are selected, content images corresponding to the selected content icons, and adding the content images corresponding to the selected content icons to a region of the base plate image to obtain a plate face image, where the plate face image is a two-dimensional image; and
acquiring, in the case that the thickness icon in the element bar is selected, a thickness corresponding to the plate face image, and generating a plate-like three-dimensional model on the basis of the thickness corresponding to the plate face image and the plate face image.

In the art, the plate-like three-dimensional model may include, for example, notice board models, name plate models, pet tag models, house number plate models, key chain models, or the like, which often have strong demands for customization or personalization. According to the technical solutions provided by the present disclosure, the element bar for user selection and the two-dimensional base plate image are displayed, and on the basis of the case that the content icon in the element bar is selected, operations are performed on the two-dimensional base plate image to obtain a plate face image, thereby customizing the content on the plate-like three-dimensional model. In addition, by selecting the thickness icon, the generation of the plate-like three-dimensional model can be easily completed. The above technical solutions enable the generation of the three-dimensional model through the operations on the two-dimensional image, which simplifies the operation steps, lowers the entry barrier for users, and thus has the advantage of wide applicability.

With reference to the first aspect, in a possible implementation, the displaying the base plate image includes:
displaying a default base plate image; displaying a base plate editing bar, where the base plate editing bar includes at least one icon of a shape icon, a color icon, and a base plate border icon; and acquiring selection information corresponding to the at least one icon, generating the base plate image described by the selection information, and displaying the base plate image.

The base plate editing bar is displayed, so as to help users edit the shape, color, and base plate border of the base plate in the two-dimensional base plate image, and help the user edit the base plate, thereby improving the customizability of the base plate.

With reference to the first aspect, in a possible implementation, the at least one icon includes a hole configuration icon. In the case that the hole configuration icon in the element bar is selected, the selection information includes hole configuration information, where the hole configuration information includes at least one of hole dimension, number of holes, and positions of the holes on the base plate image. The generating the base plate image described by the selection information, and displaying the base plate image includes: generating the base plate image having a hole described by the hole configuration information.

The at least one icon is configured with the hole configuration icon, so as to help users perform hole design on the base plate image. This helps the users apply the above optional solutions in some scenarios where the hole design is required, for example, in tag and pendant scenarios.

With reference to the first aspect, in a possible implementation, the acquiring the selection information corresponding to the at least one icon includes:
displaying, in the case that any one icon of the at least one icon is selected, at least two items of selectable information corresponding to the any one icon; and acquiring the selection information selected from the at least two items of selectable information.

After determining the selected any one icon, at least two items of selectable information of the any one icon are displayed, so as to help users further perform personalized customization on the base plate on the basis of the at least two items of selectable information, thereby further improving the customizability of the base plate.

With reference to the first aspect, in a possible implementation, the content icon includes at least one of a text icon, a drawing icon, and a graphic icon.

At least one of the text icon, the drawing icon, and the graphic icon is set, so as to help users edit texts, drawings, or graphics.

With reference to the first aspect, in a possible implementation, the acquiring the content images corresponding to the selected content icons includes:
displaying at least two selectable images corresponding to the selected content icons; and acquiring an image selected from the at least two selectable images as the content image.

After determining the selected content icon, at least two selectable images of the content icon are displayed, so as to help users further perform personalized customization on a content icon of the three-dimensional model on the basis of the at least two selectable contents, thereby further improving the customizability of the content icon of the three-dimensional model.

With reference to the first aspect, in a possible implementation, after adding the content images corresponding to the selected content icons to the region of the base plate image, the method further includes:
acquiring construction information of the content image input by a target object, where the construction information includes at least one of position information, dimension information, and color information; and adjusting the content image in a region of the base plate image on the basis of the construction information, so as to obtain the plate face image.

The construction information of the content image is acquired, so as to help users perform dimension editing, position adjustment, or color configuration on the content image through the construction information.

With reference to the first aspect, in a possible implementation, the acquiring the thickness corresponding to the plate face image includes:
displaying a thickness adjustment panel, where the thickness adjustment panel includes at least one adjustment bar of a base plate image thickness bar and a content image thickness bar, the base plate image thickness bar is configured for the target object to input a thickness corresponding to the base plate image, and the content image thickness bar is configured for the target object to input a thickness corresponding to the content image; and acquiring the thickness input by the target object through the at least one adjustment bar as a thickness corresponding to the plate face image.

After the thickness adjustment panel is displayed, the thickness corresponding to the base plate image and the thickness corresponding to the content image that are input by the target object can be acquired, and then a three-dimensional image is generated on the basis of the thickness corresponding to the base plate image and the thickness corresponding to the content image, thereby realizing the conversion from a two-dimensional plate face image to a plate-like three-dimensional model.

With reference to the first aspect, in a possible implementation, the thickness corresponding to the base plate image includes: the thickness corresponding to a border of the base plate image and the thickness corresponding to a region within the border of the base plate image.

The thickness of the border of the base plate image and the thickness of the region within the border of the base plate image are set independently, such that the hierarchical structure of the base plate border and the region within the base plate border can be displayed, thereby improving the stereoscopic effect of the plate-like three-dimensional model.

With reference to the first aspect, in a possible implementation, the method is performed by an electronic device. The method further includes:
sending the plate-like three-dimensional model to a 3D printer communicatively connected to the electronic device; or sending the plate-like three-dimensional model to a cloud server communicatively connected to the electronic device.

Sending the plate-like three-dimensional model through the communicatively connected 3D printer can realize 3D printing of the three-dimensional model, and sending the plate-like three-dimensional model through the communicatively connected cloud server can realize cloud storage of the three-dimensional model.

In a second aspect, an apparatus for generating a plate-like three-dimensional model is provided. The apparatus includes:
a display module, configured to display a base plate image and an element bar, where the base plate image is a two-dimensional image, and the element bar includes a thickness icon and at least one content icon;
an interaction module, configured to acquire, in the case that one or more content icons in the element bar are selected, content images corresponding to the selected content icons; and acquire, in the case that a thickness icon in the element bar is selected, the thickness corresponding to the plate face image; and
a generation module, configured to add the content images corresponding to the selected content icons to a region of the base plate image to obtain a plate face image, where the plate face image is a two-dimensional image, and generate a plate-like three-dimensional model on the basis of the thickness corresponding to the plate face image and the plate face image.

In a third aspect, an electronic device is provided. The electronic device includes a processor, a display, and a memory. The memory is configured to store one or more programs, the one or more programs are configured to be executed by the processor, and the programs include instructions for performing the method provided in the first aspect.

In a fourth aspect, a computer-readable storage medium is provided. The computer-readable storage medium includes instructions. The instructions, when run on a computer, cause the computer to perform the method provided in the first aspect.

In a fifth aspect, a computer program product is provided, which includes a program code. When a computer runs the program code, the computer is configured to perform the method provided in the first aspect.

The implementation of the embodiments of the present disclosure has the following beneficial effects: The plate-like three-dimensional model may include, for example, notice board models, name plate models, pet tag models, house number plate models, key chain models, or the like, which often have strong demands for customization or personalization. According to the technical solutions provided by the present disclosure, the element bar for user selection and the two-dimensional base plate image are displayed, and on the basis of the case that the content icon in the element bar is selected, operations are performed on the two-dimensional base plate image to obtain a plate face image, thereby customizing the content on the plate-like three-dimensional model. In addition, by selecting the thickness icon, the generation of the plate-like three-dimensional model can be easily completed. The above technical solutions enable the generation of the three-dimensional model through the operations on the two-dimensional image, which simplifies the operation steps, lowers the entry barrier for users, and thus has the advantage of wide applicability.

### BRIEF DESCRIPTION OF THE DRAWINGS

To more clearly illustrate the technical solutions in the embodiments of the present disclosure or in the related art, the accompanying drawings required for illustrating the embodiments or the related art are briefly described below. It is apparent that the accompanying drawings in the following description are merely some embodiments of the present disclosure. Those of ordinary skill in the art may still derive other drawings from these accompanying drawings without creative efforts.
FIG. 1 is a schematic diagram of an electronic device;
FIG. 2 is a schematic flowchart of a method for generating a plate-like three-dimensional model according to an embodiment of the present disclosure;
FIG. 3 is a schematic flowchart of a method for generating a plate-like three-dimensional model according to Embodiment 1 of the present disclosure;
FIG. 4a is a schematic display diagram of an interactive display page according to Embodiment 1 of the present disclosure;
FIG. 4b is a schematic display diagram of an element bar according to Embodiment 1 of the present disclosure;
FIG. 4c is a schematic display diagram of three items of construction information provided by text icons according to Embodiment 1 of the present disclosure;
FIG. 4d is a schematic display diagram of a plurality of items of selectable information provided by drawing icons according to Embodiment 1 of the present disclosure;
FIG. 4e is a schematic display diagram of four items of selectable information provided by graphic icons according to Embodiment 1 of the present disclosure;
FIG. 4f is a schematic display diagram of a plate face image according to Embodiment 1 of the present disclosure;
FIG. 4g is a schematic display diagram of a base plate editing bar according to Embodiment 1 of the present disclosure;
FIG. 5a is a schematic display diagram of a thickness adjustment panel according to Embodiment 1 of the present disclosure;
FIG. 5b is a schematic display diagram of a plate-like three-dimensional model according to Embodiment 1 of the present disclosure; and
FIG. 6 is a schematic structural diagram of an apparatus for generating a plate-like three-dimensional model according to an embodiment of the present disclosure.

### DETAILED DESCRIPTION

To make those skilled in the art better understand the technical solutions of the present disclosure, the technical solutions in the embodiments of the present disclosure will be clearly and fully described below with reference to the accompanying drawings in the embodiments of the present disclosure. It is apparent that the described embodiments are merely some but not all of the embodiments of the present disclosure. On the basis of the embodiments in the present disclosure, all other embodiments obtained by those skilled in the art without creative work shall fall within the protection scope of the present disclosure.

The terms "first" and "second" in the description, claims, and the above accompanying drawings of the present disclosure are used to distinguish different objects and are not intended to describe a particular order. In addition, the terms "comprise", "include", "have", and any variants thereof are intended to cover a non-exclusive inclusion. For example, a process, method, software, product, or device that includes a series of steps or units is not limited to the listed steps or units but further includes other steps or units not listed or inherent to the process, method, product, or device.

Reference to "embodiment" herein means that a particular feature, structure, or characteristic described in combination with the embodiment can be included in at least one embodiment of the present disclosure. The references of the word throughout the specification do not necessarily refer to the same embodiment, nor do they refer to separate or alternative embodiments that are exclusive of other embodiments. It will be explicitly and implicitly understood by those skilled in the art that the embodiments described herein can be combined with other embodiments.

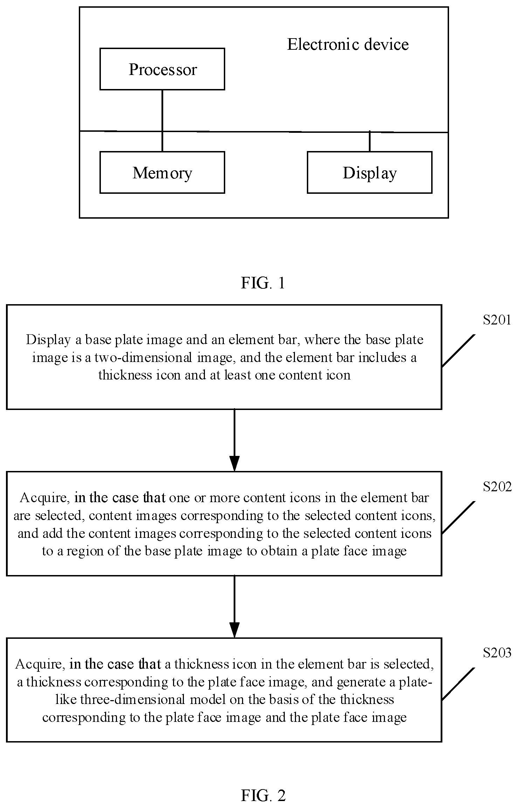

Referring to FIG. 1, an electronic device is provided in FIG. 1. As shown in FIG. 1, the above electronic device may include: a processor, a memory, and a display. The above components can be connected through a bus or other means. The present disclosure does not limit the specific method for the above connection.

The above processor may be implemented on the basis of one or more microprocessors, microcontrollers, digital signal processors, baseband processors, power management units, audio-video codec chips, application-specific integrated circuits, display driver integrated circuits, or the like.

The above memory may be hard disk drive memory, non-volatile memory (for example, flash memory or other electronic programmable read-only memories configured to form a solid-state drive), volatile memory (for example, static or dynamic random access memory), or the like. This is not limited to the embodiments of the present disclosure.

The above display may be one of or a combination of several of a liquid crystal display, an organic light-emitting diode display, an electronic ink display, a plasma display, and a display using other display technologies. The display may include a touch sensor array (i.e., the display may be a touch display). The touch sensor may be a capacitive touch sensor formed by an array of transparent touch sensor electrodes (for example, indium tin oxide (ITO) electrodes), or may be a touch sensor formed by using other touch technologies, for example, acoustic wave touch, pressure-sensitive touch, resistive touch, optical touch, etc. This is not limited to the embodiments of the present disclosure. The electronic device may further include a battery, a power management circuit, a communication circuit, or the like.

The electronic device may be a 3D printer. The 3D printer further includes a print table, a driving apparatus, and a printing head. The printing head is arranged above the print table, and the driving device is configured to drive the printing head to generate a relative displacement between the printing head and the print table.

The electronic device may also be a device, such as a mobile phone or a computer, that can be communicatively connected to a cloud server or a 3D printer.

The electronic device may be an electronic device of a system such as IOS, Android, HarmonyOS, or Windows, or may also be an electronic device of other systems. The present disclosure does not limit the above specific system.

Referring to FIG. 2, FIG. 2 is a schematic flowchart of a method for generating a plate-like three-dimensional model according to an embodiment of the present disclosure. The method shown in FIG. 2 can be performed by the electronic device shown in FIG. 1. The above electronic device includes, but is not limited to, a smartphone, a tablet, a laptop, an embedded device, a server, a 3D printer, or the like. As shown in FIG. 2, the above method includes the following steps.

In step S201, a base plate image and an element bar are displayed.

The displaying described above can be implemented through a display page of an application. Certainly, in an optional application scenario, the base plate image and the element bar can also be displayed through a browser or plug-in. Specifically, the base plate image and the element bar can be displayed on an interactive main page through the browser or plug-in. The present disclosure does not limit the specific implementation of the displaying described above.

The above base plate image may be a two-dimensional image, and the two-dimensional image may also be referred to as a planar image. The above element bar may include a thickness icon and at least one content icon. The above element bar may also be named as an icon bar, an operation bar, or the like. In addition, a display region of the above element bar may partially overlap or not overlap with a display region of the base plate image. Certainly, the display region of the element bar may also be included in the display region of the base plate image.

The embodiments of the present disclosure also do not limit the representation form of the above content icon and the base plate image. For example, the content icon may be represented through a shape, or may also be represented through text or other means.

Displaying the base plate image described above may include: displaying a default base plate image. For example, a default rectangular base plate image, a circular base plate image, a triangular base plate image, or the like can be displayed. Certainly, in an optional application scenario, a base plate editing bar can be displayed, where the base plate editing bar may include at least one icon of a shape icon, a color icon, and a base plate border icon; selection information of a target object for the at least one icon is acquired, a base plate image described by the selection information is generated, and the base plate image is displayed. For example, if the target image selects a color icon and the selection information is yellow, a yellow base plate image is generated.

Optionally, in the case that the default base plate image is selected, the base plate editing bar is displayed. Specifically, the default base plate image being selected may be that the default base plate image is clicked.

Optionally, the displayed base plate image may not be a default base plate image, but a previously edited base plate image.

In an optional application scenario, the positional relationship between a display region of the above base plate editing bar and the display region of the base plate image may be, for example, that the display region of the base plate editing bar may at least partially overlap or not overlap with the display region of the base plate image. Certainly, the display region of the base plate editing bar may also be within the display region of the base plate image. Certainly, in an optional application scenario, the display region of the above base plate editing bar may also be within a display region of an interactive main interface, or outside the display region of the interactive main interface. The interactive main interface is at least a partial region on the display, and both the base plate image and the element bar are located in the interactive main interface. The above interactive main interface can be implemented on some two-dimensional operation software, for example, two-dimensional drawing software or software including two-dimensional drawing functions. The above base plate editing bar can be used to edit the base plate image or the base plate border image. For example, the thickness of a contour line of the base plate border can be adjusted through the base plate editing bar.

The above at least one icon may further include a hole configuration icon. In an optional application scenario, in the case that the hole configuration icon is selected, the selection information may include hole configuration information. The hole configuration information may be at least one of hole dimension, number of holes, and positions of the holes on the base plate image. Accordingly, generating the base plate image described by the selection information and displaying the base plate image includes: generating a base plate image having the hole described by the above hole configuration information. The above hole dimension includes, but is not limited to, hole depth, hole diameter, or other hole-related dimensions. Punching holes is a common requirement for notice boards or name plates. However, in existing solutions, there is no specific modeling method for punching holes. In the embodiments of the present disclosure, in the case that at least one icon includes a hole configuration icon, it is convenient for the target object (i.e., the operator) to punch holes in the base plate of the plate-like three-dimensional model. This enables the plate-like three-dimensional model to be made into a pendant, and also facilitates the implementation of other application scenarios where a hole is required, such as placing magnets or other objects in the hole, thereby improving the user experience.

Acquiring the selection information corresponding to the at least one icon described above, may include:
displaying, in the case that any one icon of the at least one icon is selected, at least two items of selectable information corresponding to the any one icon; and acquiring the selection information selected from the at least two items of selectable information. The above at least two items of selectable information may be default selectable information, or may be custom-set selectable information. Taking a shape icon as an example, the at least two items of selectable information of the above shape icon may be rectangles, circles, triangles, or the like. Certainly, the two items of selectable information may also be custom shapes uploaded through custom settings. Taking a color icon as an example, the at least two items of selectable information of the above color icon may be at least two colors. Taking a base plate border icon as an example, the at least two items of selectable information of the above base plate border icon may be at least two border widths.

In step S202, in the case that one or more content icons in the element bar are selected, content images corresponding to the selected content icons are acquired, and content images corresponding to the selected content icons are added to a region of the base plate image to obtain a plate face image. The above plate face image may be a two-dimensional image.

The case that one or more content icons in the element bar are selected described above may include: when the case that the target object (i.e., the operator of the electronic device, or the user) clicks any one or more content icons in the element bar is collected, determining that the content icons in the element bar are selected. The position clicked by the target object may be acquired through a touch sensor array of a touch display, or may be acquired through a mouse. It should be noted that in the embodiments of the present disclosure, there may be one or more target objects. In the case that a plurality of targets, each target object may perform one or more interaction actions for the electronic device to sense.

The above content icon may include at least one of a text icon, a drawing icon, and a graphic icon.

In an optional application scenario, when the target object selects any one content icon in the element bar, at least two selectable images corresponding to the any one content icon are displayed, and the image selected from the at least two selectable images is acquired as a content image corresponding to the selected content icon.

Certainly, in the case that the selected content icon is a text icon, an input bar may also be displayed within the region of the base plate image for the target object to input text, and the input text information is acquired to generate a corresponding text image for adding to the region of the base plate image.

Certainly, the above at least two selectable images may also be customized by the target object. Taking a drawing icon as an example, the target object may input an SVG file, which will then be inserted as an SVG icon into a selectable image of the drawing icon. Certainly, the user may also input a picture in a jpeg or png format, and the picture in the jpeg or png format will be binarized to form an icon and then inserted into the selectable image of the base plate drawing icon. Users can upload an SVG file themselves, which will then be inserted as an SVG icon into the base plate image. They can also upload a picture of a jpeg or png file, which will be binarized and then inserted into the base plate. Exemplarily, after adding the content images corresponding to the selected content icons to the region of the base plate image, the method may further include:
acquiring construction information of the content image input by a target object, where the above construction information may include at least one of position information, dimension information, and color information; and adjusting the content image in a region of the base plate image on the basis of the above construction information, so as to obtain a plate face image.

The above construction information of the input content image may be input by various methods. For example, a construction information input bar is displayed to collect construction information input by the target object in the construction information input bar, or a construction information option bar may also be displayed to collect construction information selected by the target object in the construction information option bar. Certainly, in an optional application scenario, the construction information may also be input by other methods. For example, position information or dimension information is input by moving the position of the content image with the mouse. For another example, the target object can drag the content image freely to input the position information. Certainly, the target object can also zoom in or zoom out the content image by scrolling the mouse wheel, or the target object can rotate the content image at an angle by moving the mouse. The present disclosure does not limit the input method of the above construction information.

In step S203, in the case that a thickness icon in the element bar is selected, a thickness corresponding to the plate face image is acquired, and a plate-like three-dimensional model is generated on the basis of the thickness corresponding to the plate face image and the plate face image.

For the specific implementation of the case that the thickness icon in the element bar is selected described above, reference can be made to the specific implementation of the case that the content icon is selected in step S202, which will not be repeated here.

Acquiring the thickness corresponding to the plate face image described above may include:
displaying a thickness adjustment panel, where the thickness adjustment panel includes at least one adjustment bar of a base plate image thickness bar and a content image thickness bar, the base plate image thickness bar is configured for the target object to input a thickness corresponding to the base plate image, and the content image thickness bar is configured for the target object to input a thickness corresponding to the content image; and
acquiring the thickness input by the target object through the at least one adjustment bar as a thickness corresponding to the plate face image.

The above thickness corresponding to the base plate image includes, but is not limited to, the thickness corresponding to a border of the base plate image and the thickness corresponding to a region within the border of the base plate image.

It should be noted that the thickness corresponding to the plate face image is the thickness of the plate-like three-dimensional model, and the thickness corresponding to the base plate image is the thickness of the base plate in the plate-like three-dimensional model, where the base plate includes the border. Therefore, the thickness corresponding to the border of the base plate image is the thickness of the base plate border, and the thickness corresponding to the region within the border of the base plate image is the thickness of the region within the base plate border.

The content image on the plate face image is the content on the plate-like three-dimensional model, and the thickness corresponding to the content image is the thickness of the content on the plate-like three-dimensional model. Further, the thickness corresponding to the content image can be further divided into thicknesses corresponding to a text image, a drawing image, and a graphic image, that is, the thickness of a text, the thickness of a drawing, and the thickness of a graphic on the plate-like three-dimensional model, respectively.

The thickness corresponding to the base plate image described above(which may be the thickness corresponding to the base plate graphic border and/or the thickness corresponding to the region within the border of the base plate image) may be an absolute thickness, for example, an actual thickness of the base plate, such as 3 mm or 5 mm. In an optional application scenario, the thickness corresponding to the base plate graphic border described above may be different from the thickness corresponding to the region within the border of the base plate image. For example, the thickness corresponding to the region within the border of the base plate image is 4 mm, and the thickness corresponding to the base plate graphic border is 5 mm, which may also be other values and will not be repeated here.

The thickness corresponding to the content image described above may be an absolute thickness or a relative thickness (i.e., a thickness value relative to a surface of the base plate), and the above relative thickness may be a positive value or a negative value. If the relative thickness is a positive value, it indicates that the element corresponding to the above content icon is displayed in a protruding manner on the region within the border of the base plate image; and if the relative thickness is a negative value, it indicates that the element corresponding to the above content icon is displayed in a recessed manner on the region within the border of the base plate image. The thickness adjustment plate facilitates the acquisition of the thickness parameter of the plate-like three-dimensional model set by the user, thereby simplifying user operation.

According to the technical solutions provided by the present disclosure, when the plate-like three-dimensional model is generated, the element bar for user selection and the two-dimensional base plate image are displayed, and on the basis of the case that the content icon in the element bar is selected, operations are performed on the two-dimensional base plate image to obtain a plate face image, thereby realizing the customized design of the content on the plate-like three-dimensional model. In addition, by selecting the thickness icon, the generation of the plate-like three-dimensional model can be easily completed. In this way, when the element icon in the element bar is selected, the selected element can be directly displayed on the base plate image to obtain the plate face image, and then the selected element is added to the region of the base plate image. Then, when the thickness icon is selected, the thickness value corresponding to the plate face image is acquired, such that the three-dimensional data of the three-dimensional model is collected, and thus the plate-like three-dimensional model can be directly generated. The above technical solutions enable the generation of the three-dimensional model through the operations on the two-dimensional image, which simplifies the operation steps, lowers the entry barrier for users, reduces the professional requirements for the operations, and thus has the advantage of wide applicability.

According to the embodiments of the present disclosure, focusing on scenarios such as notice boards, pet tags, house number plates, or key chains, a front-end-based interaction method for operating a canvas in a two-dimensional interface is designed, such that a plate-like three-dimensional model can be ultimately generated.

On the basis of the front end, users can start model design only by opening a web page on a computer, without downloading software.

Operating on a two-dimensional interface is much simpler and more user-friendly for general users than operating on a three-dimensional interface. Nowadays, most users who have had experience with computers are already familiar with operations on two-dimensional interfaces, such as those in software like PowerPoint and World. However, most users have no experience with 3D software, so it is difficult for the users to operate a three-dimensional interface. The users need to master the operation method for adjusting the viewing angle of the three-dimensional interface first, and then need to interact with the model while adjusting the viewing angle. This makes the operation more difficult.

A canvas-based operation method is provided, which can meet the customized requirements of users. On the canvas, the users can add an element (content) image freely, where the element includes text, icons (or also referred to as drawings), and basic graphics. The users can also drag the element image freely to zoom in or zoom out the element image, or perform a rotation operation on the element image.

The size of the base plate image can be adjusted freely, and the actual size will be displayed in the interface with a ruler. The printable region of different 3D printers will also be displayed to prevent the dimension of the base plate image from being too large. The border of the base plate image can be adjusted. Specifically, the thickness and the distance to the outer contour of the base plate image can be adjusted, or the border can be hidden. In addition to the rectangular base plate, base plate images in different shapes are provided to meet different requirements. To facilitate the use of the printed model by users, punching holes in the base plate is also allowed, thereby facilitating scenarios such as threading or magnet placement.

Exemplarily, generating the plate-like three-dimensional model described above may specifically include:
The content of the elements (the base plate image, content images, etc.) and the attributes of the elements of the two-dimensional image (i.e., a plate face image) in the interactive main interface will be recorded, and all edits made by the target object to the elements in the interactive main interface will be synchronized to update the recorded data. When the target object needs to generate a plate-like three-dimensional model from the two-dimensional image in the interactive main interface, the 3D generator will redraw images of the base plate image and the content images on the basis of the recorded data in the 3D rendering engine, and then stretch the two-dimensional image into a three-dimensional model on the basis of the thickness of the base plate image and the thicknesses of the content images set by the target object, so as to obtain the plate-like three-dimensional model.

When the plate-like three-dimensional model needs to be saved, if the model is saved in the electronic device (i.e., saved locally), the plate-like three-dimensional model is exported as a 3mf file for previewing (this previewing step is not an unnecessary step before saving) and then saved in the memory of the electronic device. If the model is saved in the cloud (cloud server), the electronic device serializes the data corresponding to the plate-like three-dimensional model into JavaScript Object Notation (JSON) data, and then sends the JSON data to the cloud server for saving. When the target object needs to reopen the plate-like three-dimensional model saved in the cloud server, the electronic device requests the cloud server for the JSON data corresponding to the plate-like three-dimensional model. The 3D generator of the electronic device deserializes the JSON data to obtain the data corresponding to the plate-like three-dimensional model, and then adds the data corresponding to the plate-like three-dimensional model to the interactive main interface to obtain the plate-like three-dimensional model.

Exemplarily, the above method may further include:
sending the plate-like three-dimensional model to a 3D printer communicatively connected to the electronic device;
or sending the plate-like three-dimensional model to a cloud server communicatively connected to the electronic device.

Exemplarily, the above method may further include displaying a preview interface of the plate-like three-dimensional model. In an optional application scenario, the target object can switch between the preview interface and the display interface (i.e., the interactive main interface, which is at least a partial region on the display, where both the base plate image and the element bar are located within the interactive main interface). The switching described above may be performed to switch between the preview interface and the display interface through a custom or preset shortcut key (which may be a physical key or a virtual key displayed by the display). Certainly, the switching may also be performed to switch between the preview interface and the display interface through a switching icon. The present disclosure does not limit the specific implementation of the switching described above. The above implementation of 3D printing of the three-dimensional model by sending the plate-like three-dimensional model to the 3D printer helps users directly view the designed physical object. Sending the plate-like three-dimensional model through the cloud server can help users store, edit, or download the model through the cloud service, and send print instructions through the cloud server to the 3D printer communicatively connected to the cloud server.

The plate-like three-dimensional model sent to the 3D printer may be a 3mf file. In addition to the model data, the 3mf file may further include color information and configurations for some of the slices of the three-dimensional model (i.e., configuration data of 3D printing parameters of the three-dimensional model). Certainly, in an optional application scenario, the model may also be other files that support 3D printing, such as an AMF file. Users can also export the model directly as a 3mf file for local download. In addition to the model data, the 3mf file may further include color information and configurations for some of the slices, such as the wall generation method and whether ironing is enabled. Users can open the 3mf file with slicing software to perform slicing and printing. The edited plate-like three-dimensional model will be saved in the cloud, so as to help users continue editing the model.

In terms of implementation, the content of the elements (the base plate, texts, drawings, etc.) and the attributes of the elements (content) in the 2D interface will be recorded, and all the operations of the user will be synchronized to update the recorded data. When the user needs to export 3mf or preview 3D effects, the generator will redraw the base plate and the shapes of the elements on the basis of the recorded data in the 3D rendering engine, and then stretch the graphics into a three-dimensional model on the basis of the height set by the user.

The modifications of the user will be automatically saved in the server. When saving is required, the generator serializes the recorded data into JSON and uploads the JSON to the server. When the user reopens the previously edited plate-like three-dimensional model, the generator fetches the previously serialized JSON data from the cloud server, deserializes the data, and then adds the elements to the 2D canvas (the interactive main interface).

### Embodiment 1

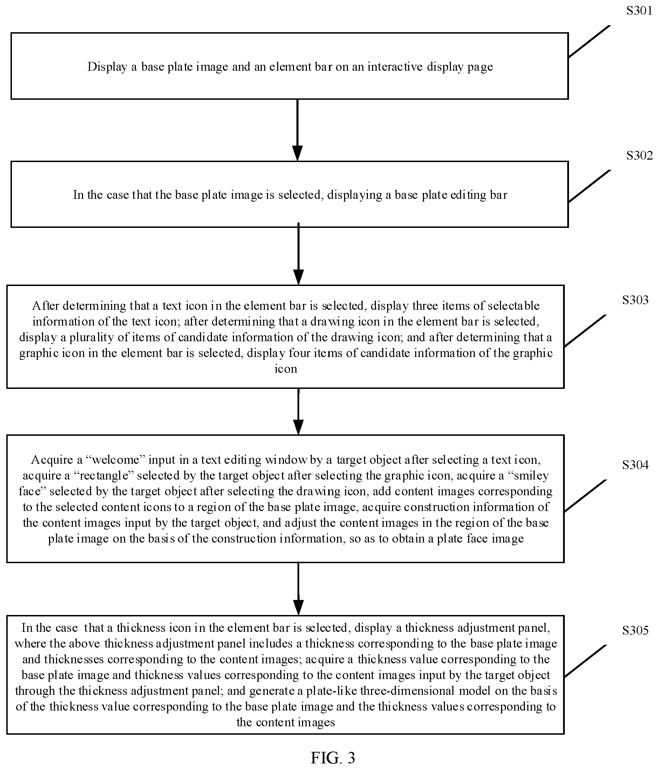

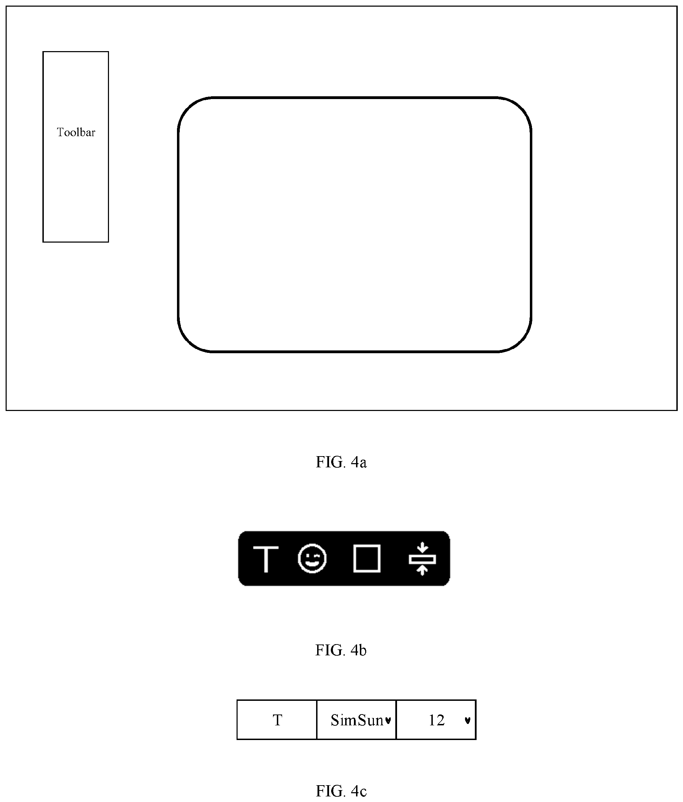

Embodiment 1 of the present disclosure provides a method for generating a plate-like three-dimensional model. The technical scenario of Embodiment 1 of the present disclosure may include: The above method is performed on an electronic device, which displays a base plate image and an element bar through an interactive main interface (as shown in FIG. 4a). In addition, in order to facilitate user operation, a toolbar may further be additionally displayed. The above toolbar may include some tools, such as a dimension icon, a radian icon (or referred to as a fillet icon), a translation icon, or a rotation icon. The above tools can be used to perform operations, such as dimension measurement or marking, filleting, translation, or rotation on the base plate image or content icons of the element bar. Certainly, in an optional application scenario, the above toolbar may also be hidden or not displayed in a display region of the interactive main interface. FIG. 4b is a schematic display diagram of an element bar of this embodiment. As shown in FIG. 4b, the icons included in the above element bar from left to right are as follows: a text icon, a drawing icon, a graphic icon, and a thickness icon. The default base plate image in this embodiment is a base plate of a rounded rectangle (a rectangle with rounded corners). FIG. 3 is a schematic flowchart of a method for generating a plate-like three-dimensional model according to the present disclosure. As shown in FIG. 3, the above method includes the following steps.

In step S301, a base plate image and an element bar are displayed on an interactive main interface. The schematic display diagram of the above interactive display page is shown in FIG. 4a. For ease of viewing, the background color of the element bar here is set to black.

In step S302, in the case that the base plate image is selected, a base plate editing bar is displayed. The above base plate editing bar includes shape icons. If none of the shape icons is selected, the default base plate image is not modified, and if a certain shape icon is selected, the base plate image is modified to the certain shape icon.

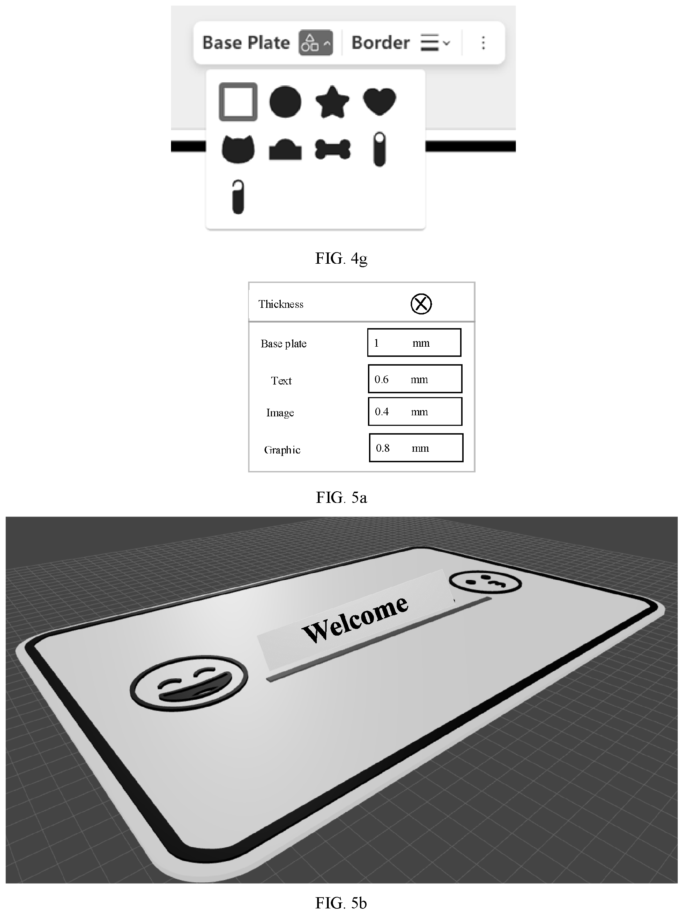

The schematic display diagram of the above base plate editing bar is shown in FIG. 4g. For ease of viewing, the background color of the base plate editing bar here is white. In an optional application, a target object can edit the background color to any color. This embodiment does not limit the specific color of the above background color.

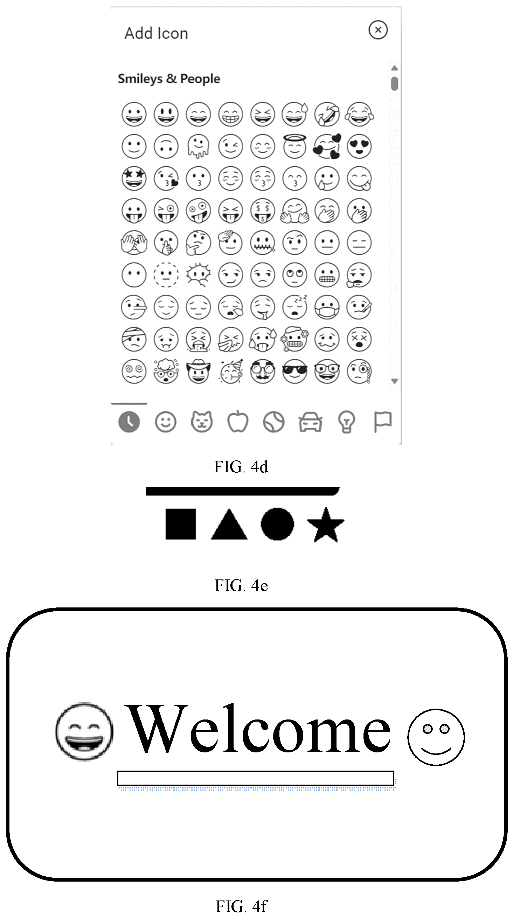

In step S303, after determining that a text icon in the element bar is selected, a text editing window of the text icon is displayed; after determining that a drawing icon in the element bar is selected, a plurality of items of selectable information of the drawing icon are displayed, as shown in FIG. 4d, where the above plurality of items of selectable information may include actual shapes of a plurality of drawings; and after determining that a graphic icon in the element bar is selected, four items of selectable information of the graphic icon are displayed, as shown in FIG. 4e, where the above four items of selectable information may include shapes of a rectangle, a triangle, a circle, and a pentagram. In step S304, a "welcome" input in the text editing window by the target object after selecting the text icon is acquired, a "rectangle" selected by the target object after selecting the graphic icon is acquired, a "smiley face" selected by the target object after selecting the drawing icon is acquired, content images corresponding to the selected content icons are added to the region of the base plate image, construction information of the content images input by the target object is acquired, and the content images are adjusted in the region of the base plate image on the basis of the construction information, so as to obtain a plate face image.

After the text icon is clicked, a text element will be added to the base plate image. Users can edit the text content and modify the font size and the font of the text. The text content supports English, German, Chinese, Japanese, or Korean. Users can also upload local fonts and use their own fonts, thereby supporting more languages.

After the drawing icon is clicked, an icon selection panel will pop up, from which users can select a drawing to insert into the base plate image.

After the graphic icon is clicked, users can select one of the provided graphics to insert into the base plate image.

The above construction information includes: position information, dimension information, and color information. For example, when acquiring the construction information of the text icon, three items of construction information for the text image can be displayed. The above three items of construction information are a color window, a font window, and a font size window. As shown in FIG. 4c, the region marked "T" is the color window, the region marked "SimSun" is the font window, and the region marked "12" indicates a font size of the font size window.

The schematic display diagram of the above plate face image is shown in FIG. 4f.

In step S305, in the case that a thickness icon in the element bar is selected, a thickness adjustment panel is displayed, where the above thickness adjustment panel includes a thickness corresponding to the base plate image and thicknesses corresponding to the content images; a thickness value corresponding to the base plate image and thickness values corresponding to the content images input by the target object through the thickness adjustment panel are acquired, and the plate-like three-dimensional model is generated on the basis of the thickness value corresponding to the base plate image and the thickness values corresponding to the content images.

The schematic display diagram of the above thickness adjustment panel is shown in FIG. 5a. The base plate may be further divided into a border and a region within the border.

The above method may further include displaying a preview interface of the plate-like three-dimensional model. Specifically, the displaying may occur after the plate-like three-dimensional model is generated, or may be performed at any time. The target object can switch between the preview interface and the interactive main interface. The above preview interface of the plate-like three-dimensional model is shown in FIG. 5b.

According to the technical solutions provided by the present disclosure, when the plate-like three-dimensional model is generated, the target object can very easily obtain the designed two-dimensional plate face image through the operations on the two-dimensional image. Then, when the thickness icon is selected, the thickness value of the plate-like three-dimensional model is acquired, and the three-dimensional model can be generated on the basis of the two-dimensional plate face image and the thickness value. The above technical solutions enable the generation of the three-dimensional model through the operations on the two-dimensional image, which simplifies the operation steps, reduces the professional requirements for the operations, and thus has the advantage of wide applicability.

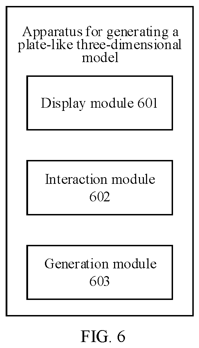

The embodiments of the present disclosure further provide an apparatus for generating a plate-like three-dimensional model. Referring to FIG. 6, FIG. 6 is a schematic structural diagram of an apparatus for generating a plate-like three-dimensional model. The apparatus includes:
a display module 601, configured to display a base plate image and an element bar, where the base plate image is a two-dimensional image, and the element bar includes a thickness icon and at least one content icon;
an interaction module 602, configured to acquire, in the case that one or more content icons in the element bar are selected, content images corresponding to the selected content icons; and acquire, in the case that the thickness icon in the element bar is selected, the thickness corresponding to a plate face image; and
a generation module 603, configured to add the content images corresponding to the selected content icons to a region of the base plate image to obtain the plate face image, where the plate face image is a two-dimensional image, and generate a plate-like three-dimensional model on the basis of the thickness corresponding to the plate face image and the plate face image.

The display module 601, the interaction module 602, and the generation module 603 described above may be further configured to perform a detailed solution in the method embodiment provided in FIG. 2 or FIG. 3, which will not be repeated here.

Referring to FIG. 1, FIG. 1 is a schematic structural diagram of an electronic device. As shown in FIG. 1, the above electronic device may include a processor, a display, and a memory. The memory is configured to store one or more programs, the one or more programs are configured to be executed by the processor, and the programs include instructions for performing the method provided in the embodiment shown in FIG. 2 or FIG. 3.

The embodiments of the present disclosure further provide a computer-readable storage medium. The computer-readable storage medium includes instructions. The instructions, when run on a computer, cause the computer to perform the method provided in the embodiment shown in FIG. 2 or FIG. 3.

The embodiments of the present disclosure further provide a computer program product, which includes a program code. When a computer runs the program code, the computer is configured to perform the method provided in the embodiment shown in FIG. 2 or FIG. 3.

It should be noted that for simplicity in describing the foregoing method embodiments, they are expressed as a series of combined actions. However, those skilled in the art should learn that the present disclosure is not limited by the described action order. This is because, according to the present disclosure, certain steps may be performed in a different order or simultaneously. Further, those skilled in the art should also learn that the embodiments described in the specification are all preferred embodiments. The actions and modules involved are not necessarily essential to the present disclosure.

In the above embodiments, the descriptions of the embodiments focus on different aspects. For a part that is not described in detail in an embodiment, reference can be made to related descriptions in other embodiments.

In the embodiments provided by the present disclosure, it should be understood that the disclosed apparatus may be implemented through other methods. For example, the apparatus embodiments described above are merely illustrative. The division of the above units, for example, only represents a logical functional division. In actual implementation, there may be other division methods. For example, multiple units or components may be combined or integrated into another system, or some features may be ignored or not performed. Additionally, the mutual couplings or direct couplings or communication connections displayed or discussed may be indirect couplings or communication connections through some interfaces, apparatuses, or units. These connections may be electrical or of other forms.

The unit described above as a separate component may or may not be physically separate. The component shown as a unit may or may not be a physical unit, that is, it may be located in one place or may be distributed across multiple network units. Part or all of the units may be selected based on actual needs to achieve the objectives of the solutions of the embodiments.

In addition, in the embodiments of the present disclosure, the functional units may be integrated into one processing unit or may exist as separate physical units; or, two or more units may be integrated into one unit. The above integrated units may be implemented in the form of hardware, or may be implemented in the form of software functional units.

If the above integrated units are implemented in the form of software functional units and sold or used as independent products, they may be stored in a computer-readable memory. On the basis of such understanding, the technical solutions of the present disclosure in essence, or the parts contributing to the existing technology, or all or part of the technical solutions may be embodied in the form of a software product. This computer software product is stored in a memory and includes several instructions to enable a computer device (which may be a personal computer, a server, a network device, or the like) to perform all or part of the steps of the above methods described in various embodiments of the present disclosure. The foregoing memory includes various media capable of storing program code, such as USB flash drives, read-only memory (ROM), random access memory (RAM), portable hard drives, magnetic disks, or optical disks.

Those of ordinary skill in the art may understand that all or part of the steps of various methods in the above embodiments may be performed by instructing related hardware through a program. This program may be stored in a computer-readable memory. The memory may include: flash memory, read-only memory (ROM), random access memory (RAM), magnetic disks, optical disks, or the like. The embodiments of the present disclosure are described in detail above. Specific examples are applied herein to explain the principle and the embodiments of the present disclosure. The description of the embodiments above is only used for helping to understand the method and the core idea of the present disclosure; meanwhile, for those of ordinary skill in the art, according to the idea of the present disclosure, the specific embodiments and the application range may be changed. In summary, the content of this specification should not be construed as a limitation to the present disclosure.

## Claims

1. A method for generating a plate-like three-dimensional model, comprising:
displaying a base plate image and an element bar, wherein the base plate image is a two-dimensional image, and the element bar comprises a thickness icon and at least one content icon;
acquiring, in a case that one or more content icons in the element bar are selected, content images corresponding to the selected content icons, and adding the content images corresponding to the selected content icons to a region of the base plate image to obtain a plate face image, wherein the plate face image is a two-dimensional image; and
acquiring, in a case that the thickness icon in the element bar is selected, a thickness corresponding to the plate face image, and generating a plate-like three-dimensional model on the basis of the thickness corresponding to the plate face image and the plate face image.

2. The method for generating the plate-like three-dimensional model according to claim 1, wherein said displaying the base plate image, comprises:
displaying a default base plate image;
displaying a base plate editing bar, wherein the base plate editing bar comprises at least one icon of a shape icon, a color icon, and a base plate border icon; and
acquiring selection information corresponding to the at least one icon, generating the base plate image described by the selection information, and displaying the base plate image.

3. The method for generating the plate-like three-dimensional model according to claim 2, wherein the at least one icon comprises a hole configuration icon, wherein in a case that the hole configuration icon in the element bar is selected, the selection information comprises hole configuration information, wherein the hole configuration information comprises at least one of hole dimension, number of holes, and positions of the holes on the base plate image; and said generating the base plate image described by the selection information, and displaying the base plate image comprises: generating the base plate image having a hole described by the hole configuration information.

4. The method for generating the plate-like three-dimensional model according to claim 2 or 3, wherein said acquiring the selection information corresponding to the at least one icon, comprises:
displaying, in a case that any one icon of the at least one icon is selected, at least two items of selectable information corresponding to the any one icon; and
acquiring the selection information selected from the at least two items of selectable information.

5. The method for generating the plate-like three-dimensional model according to claims any one of 1-4, wherein the content icon comprises at least one of a text icon, a drawing icon, and a graphic icon.

6. The method for generating the plate-like three-dimensional model according to claims any one of 1-5, wherein said acquiring the content images corresponding to the selected content icons, comprises:
displaying at least two selectable images corresponding to the selected content icons; and
acquiring an image selected from the at least two selectable images as the content image.

7. The method for generating the plate-like three-dimensional model according to claims any one of 1-6, wherein after adding the content images corresponding to the selected content icons to the region of the base plate image, the method further comprises:
acquiring construction information of the content image input by a target object, wherein the construction information comprises at least one of position information, dimension information, and color information; and adjusting the content image in a region of the base plate image on the basis of the construction information, so as to obtain the plate face image.

8. The method for generating the plate-like three-dimensional model according claims any one of 1-7, wherein said acquiring the thickness corresponding to the plate face image, comprises:
displaying a thickness adjustment panel, wherein the thickness adjustment panel comprises at least one adjustment bar of a base plate image thickness bar and a content image thickness bar, the base plate image thickness bar is configured for the target object to input a thickness corresponding to the base plate image, and the content image thickness bar is configured for the target object to input a thickness corresponding to the content image; and
acquiring the thickness input by the target object through the at least one adjustment bar as a thickness corresponding to the plate face image.

9. The method for generating the plate-like three-dimensional model according to claim 8, wherein the thickness corresponding to the base plate image comprises: a thickness corresponding to a border of the base plate image and a thickness corresponding to a region within the border of the base plate image.

10. The method for generating the plate-like three-dimensional model according to any one of claims any one of 1-9, wherein the method is performed by an electronic device, and the method further comprises:
sending the plate-like three-dimensional model to a 3D printer communicatively connected to the electronic device;
or sending the plate-like three-dimensional model to a cloud server communicatively connected to the electronic device.

11. An apparatus for generating a plate-like three-dimensional model, comprising:
a display module, configured to display a base plate image and an element bar, wherein the base plate image is a two-dimensional image, and the element bar comprises a thickness icon and at least one content icon;
an interaction module, configured to acquire, in a case that one or more content icons in the element bar are selected, content images corresponding to the selected content icons; and acquire, in the case that a thickness icon in the element bar is selected, the thickness corresponding to the plate face image; and
a generation module, configured to add the content images corresponding to the selected content icons to a region of the base plate image to obtain a plate face image, wherein the plate face image is a two-dimensional image, and generate a plate-like three-dimensional model on the basis of the thickness corresponding to the plate face image and the plate face image.

12. An electronic device, comprising a processor, a display, and a memory, wherein the memory is configured to store one or more programs, the one or more programs are configured to be executed by the processor, and the programs comprise instructions for performing the method according to any one of claims 1 to 10.

13. A computer-readable storage medium, comprising instructions, wherein the instructions, when run on a computer, cause the computer to perform the method according to any one of claims 1 to 10.

14. A computer program product, comprising a program code, wherein when a computer runs the program code, the computer is configured to perform the method according to any one of claims 1 to 10.
